# EUROPEAN PATENT SPECIFICATION

(11) **EP 3 279 380 B1**
(45) Date of publication and mention of the grant of the patent: **27.03.2019**
(21) Application number: 17181350.4
(22) Date of filing: 14.07.2017
(51) Int. Cl.: D04H 1/02, D04H 1/64, D04H 1/66

(54) **METHOD FOR MAKING A WADDING STRIP ELEMENT COMPRISING AT LEAST A SURFACE ADAPTED TO RECEIVE PRINT, AND THE WADDING STRIP ELEMENT MADE THEREBY, FOR USE IN PADDINGS OF CLOTHING ARTICLES SUCH AS WINDCHEATERS AND SHOES**
VERFAHREN ZUR HERSTELLUNG EINES WATTELINESTREIFENELEMENTS MIT MINDESTENS EINER ZUR AUFNAHME EINES DRUCKS ANGEPASSTEN OBERFLÄCHE UND DAMIT HERGESTELLTES WATTELINESTREIFENELEMENT ZUR VERWENDUNG IN DER WATTIERUNG VON KLEIDUNGSSTÜCKEN WIE WINDJACKEN UND SCHUHEN
PROCÉDÉ DE FABRICATION D'UN ÉLÉMENT DE BANDE D'OUATE COMPRENANT AU MOINS UNE SURFACE CONÇUE POUR RECEVOIR UNE IMPRESSION ET L'ÉLÉMENT DE BANDE D'OUATE AINSI OBTENU DESTINÉ À ÊTRE UTILISÉ DANS DES REMBOURRAGES D'ARTICLES VESTIMENTAIRES TELS QUE DES BLOUSONS ET DES CHAUSSURES

(30) Priority: 05.08.2016 IT 201600082894
(43) Date of publication of application: 07.02.2018
(73) Proprietor: Fisi Fibre Sintetiche S.p.A., 23848 Oggiono (LC) (IT)
(72) Inventor: Siniscalchi, Lucio, I-23848 OGGIONO (IT)
(74) Representative: Rastelli, Franco

(56) References cited:
- EP-A2- 0 161 380
- EP-A2- 0 214 939
- EP-A2- 0 365 491
- WO-A1-2016/118614
- US-A- 5 271 997
- US-A1- 2003 232 552

## Description

### BACKGROUND OF INVENTION

The present invention relates, in an aspect thereof, to a method for making a wadding strip element including at least a surface adapted to receive print.

In a second aspect, the present invention also relates to the related wadding strip element made by said method, in particular to be used for making paddings of clothing articles, such as, by way of non-limiting example, windcheaters and shoes.

As is known, wadding is a material with high porosity and low consistency.

A very common use of this wadding, generally made with a strip element configuration, is for paddings of clothing articles, among which, as stated, purely by way of non-limiting example, windcheaters and sneakers.

Due to its high porosity and low consistency, it was not previously possible to apply printed patterns to wadding strips, as the material deposited on the surface during printing would be dispersed between the fibers and no pattern or the like would actually be visible.

A method attempted to date for printing on wadding and/or for transferring desired materials onto at least a surface thereof was the dyeing method; however, known dyeing methods make the product susceptible to easily decomposing.

Methods have also been attempted to coat at least a desired surface of the wadding with films adapted to "stiffen" said wadding to allow it to receive the print and/or transfer material.

However, to date, these methods of applying films have not been successful commercially, so that a wadding that is "actually printable" is still not commercially available.

EP 0 365 491 A2 discloses a soft, thermally insulating, waterproofed and breathing wadding for clothing articles, comprising a carded wadding material layer covered on its two faces, by fibre layers which have been treated by suitable resins. On the wadding surface destined to be exposed to the outside, there is provided a polyurethane membrane attached by adhesives, optionally coupled to an elasticized fabric, whereas, on the opposite surface, a resilient fabric covering may be applied.

### SUMMARY OF THE INVENTION

Therefore, in the light of the above drawbacks, hindering and/or preventing printing of known wadding strips, for the aforesaid uses, the main aim of the present invention is to provide a method that allows printed patterns to be applied to at least a surface of a wadding strip, wherein the printed patterns are long lasting, also following natural wear of the clothing article or frequent washes to which the clothing article is subjected.

Within the scope of the aforesaid aim, a main object of the present invention is to provide a method of the type indicated, which also allows the transfer to the wadding strip element of other materials, in addition to printing colors, adapted to improve the technical, in particular thermal, properties, i.e. providing an increase of insulation or heat dissipation to the wadding strip designed to form the base padding of a clothing article, these auxiliary materials being applied to improve, for example, the thermal insulation of the padding.

A further object of the present invention is to provide a method of the type indicated that can operate on any wadding strip for paddings of clothing articles and/or the like, regardless of the fibers of which the wadding is made.

A further object of the present invention is to provide a method of the type indicated allowing the production of a new and inventive wadding strip adapted to receive print and, where desired, auxiliary materials to improve the technical properties of the paddings for clothing articles made from said wadding strip, and also allowing optimal and even dispersion or distribution of the heat produced in the clothing article including the wadding padding of the invention, as well as dissipation of any electrostatic charges.

A further object of the present invention is to provide a method of the type indicated that comprises a minimum number of extremely simple operating steps, all of which can be performed on devices and/or systems commercially available or easy to produce for the person skilled in the art.

A further object of the present invention is to provide a method of the type indicated that, while giving the wadding strip the desired properties of printability and transfer of any desired material, is so inexpensive that there is no substantial increase in cost for the printable wadding strip compared to commercially known wadding strips.

A further object of the present invention is to provide a method of the type indicated, providing a printable wadding strip that can be easily treated in existing devices for making paddings without complicating the usual steps for converting a generic wadding strip of a known type into the desired and greatly improved padding.

Another object of the present invention is to provide a method of the type indicated, that allows easy printing of a wadding strip made of any fiber mixture, in particular virgin fibers, recycled fibers, and/or microfibers, and of nanotube type materials.

According to an aspect of the present invention, there is provided a method for making a wadding material, as defined in the appended claims 1-8.

The invention further provides a wadding strip element, and a clothing article including the wadding strip element, as defined in the appended claims 9 and 10 respectively.

### BRIEF DESCRIPTION OF THE DRAWINGS

Further characteristics and advantages of the method of the present invention and of the printable wadding strip element produced thereby will become more apparent below from the following detailed description of a preferred embodiment thereof, illustrated by way of indicative and non-limiting example in the accompanying schematic drawings, wherein:
Fig. 1 is a flow chart illustrating the main steps of the method of the present invention;
Fig. 2 is a schematic view of a possible configuration of a possible device, illustrated by way of indicative and non-limiting example, for implementing the method of the present invention, to allow printing and transfer of desired materials in general on a wadding strip;

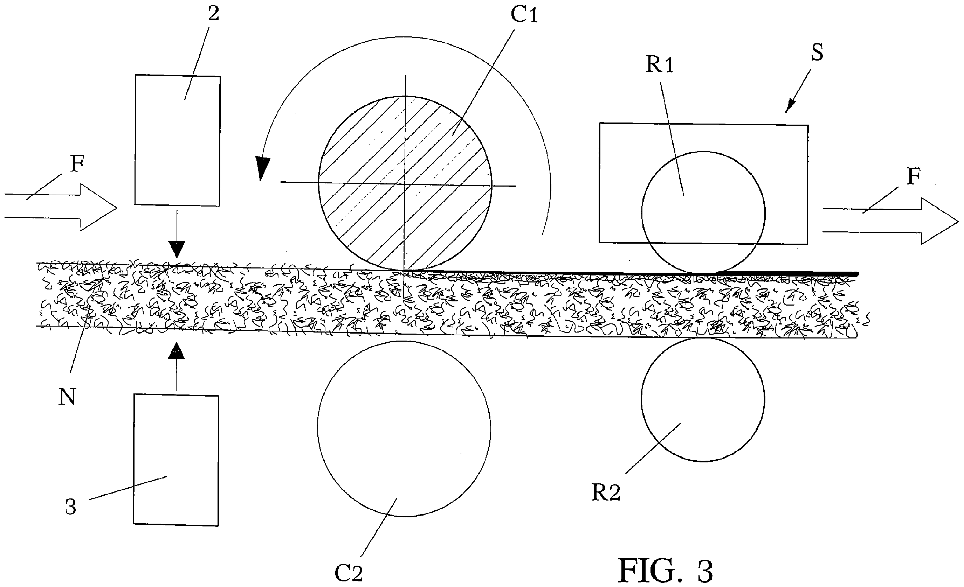

Fig. 3 is a more detailed schematic view useful to understand the operation of the device of Fig. 2 for implementing the method of the invention;

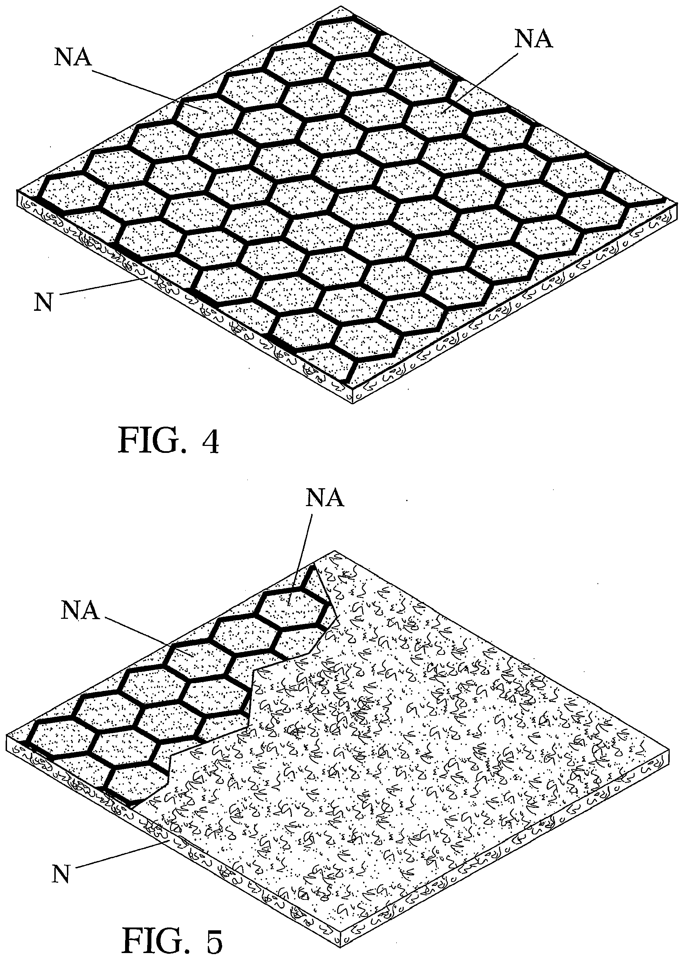

Fig. 4 shows a portion of a printed wadding strip, after having been made suitable to receive print and/or transfer of any desired material by means of the method of the invention; and
Fig. 5 is a further schematic view of a partial portion of the printed wadding strip of Fig. 4.

### DESCRIPTION OF THE PREFERRED EMBODIMENT

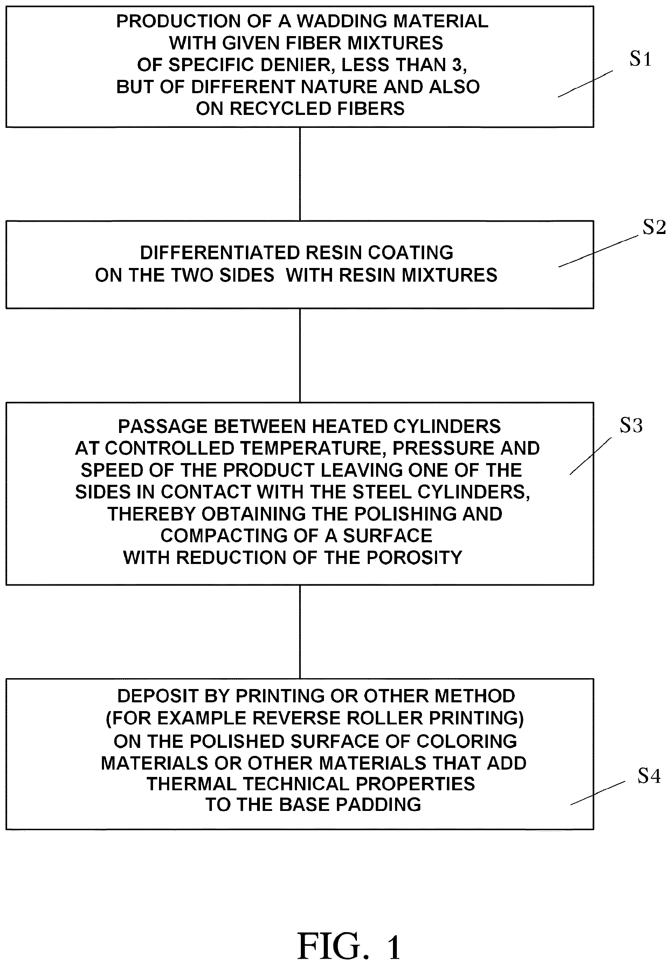

With reference to the aforesaid drawings, Fig. 1 shows an example of a flow chart of the main steps of the method of the invention.

More specifically, in a first operating step S1, wadding is made, in particular but without limitation, in the form of a strip, with given fiber mixtures of specific denier, for example advantageously less than three, but of a different nature and also of recycled fibers.

In a subsequent operating step S2, the two main surfaces or sides of the wadding strip made in the step S1 are coated with resin in a differentiated manner with suitable resin mixtures that will be described in more detail below.

In a subsequent operating step S3, the strip with the two main resin coated surfaces is caused to pass between at least two heated cylinders having a controlled temperature, pressure and speed, leaving one of the sides of the strip, according to the invention, in contact with the cylinders, preferably made of steel, so as to obtain polishing of a main surface, for example the upper surface, of the strip and the compaction thereof, with a reduction of the wadding porosity.

Finally, in a further operating step S4 of the method of the invention, printing colors or other materials adapted to add technical thermal properties to the base padding are deposited on the polished main surface by printing or other method, for example preferably by the reverse roller method, or by means of embossed cylinders or printing plates or screens.

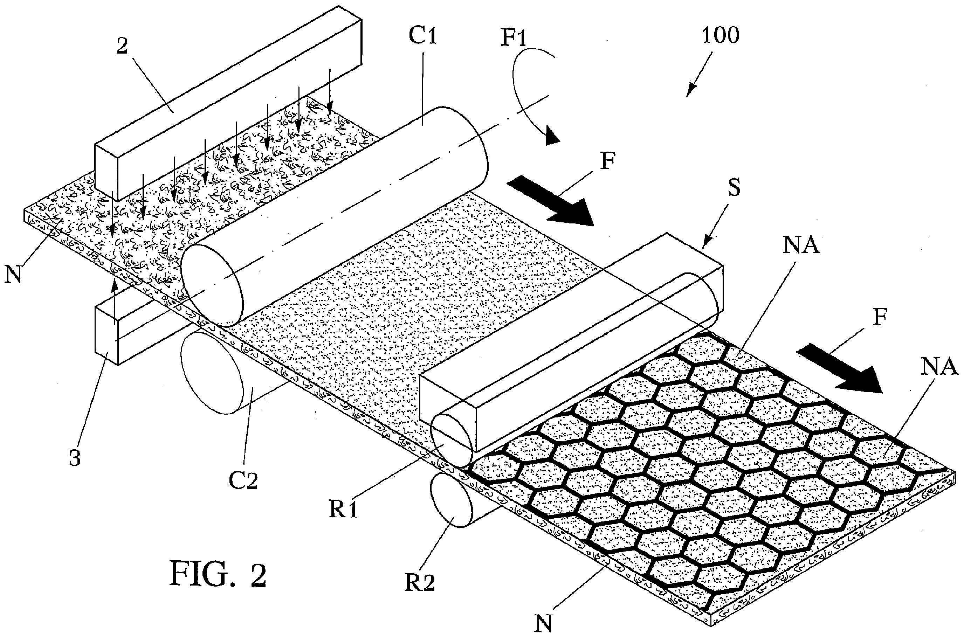

The preceding operating steps can be carried out, for example, by a device comprising as main members, those schematically shown in Fig. 2, and generally indicated by the reference numeral 100.

In particular, at the inlet (left-hand in Fig. 2) of the device 100, the wadding strip N, previously made from the desired fibers, as will be described in greater detail below, is caused to pass between two assemblies, one upper 2 and one lower 3 for the application to the upper main surface 1 and to the lower main surface 2, or sides of the wadding strip N, suitable resin materials, in a differentiated manner, by means of any desired method, for example spraying or coating.

Subsequently, the web thus treated at least on the upper 1 and lower 2 main surfaces is caused to move in the direction of the arrows F and to pass first between at least two cylinders, i.e. an upper cylinder C1 and a lower cylinder C2, preferably made of steel, of which the upper cylinder is advantageously heated to a preset temperature, as will be described in greater detail below.

Subsequently, the strip N, maintained pressed between the cylinders C1 and C2, suitably heated, will acquire reduced porosity and increased mechanical strength, as shown at the outlet of the cylinders C1 and C2 preferably rotating, for example, in the direction of the arrow F1, i.e. in Fig. 2, counter-clockwise.

Subsequently, in a final printing assembly S, the strip will be subjected to a desired printing operation, or an operation for transferring desired materials, for example by means of the well-known reverse roller R1 and R2 printing method, so that, at the outlet of the printing assembly and/or the assembly for transfer of desired materials, the strip can have the configuration in which, by way of example, a plurality of honeycomb elements NA, in contact with one another on substantially all their sides, are provided on the main upper surface of the strip.

Preferably, the honeycomb configuration NA will be obtained by applying, for example by means of the aforesaid reverse roller printing method, or any other suitable printing method, a graphene material having the well-known properties of heat and electrostatic charges dissipation, and further advantageous properties such as heat regulation, antibacterial, rapid drying properties and yet others.

From tests carried out by the Applicant it was found that the honeycomb structure printed on the upper main surface of the wadding strip treated with the method according to the invention showed electrical continuity such as to dissipate, for example, any electrostatic charge, and improved properties of dissipation of heat and air friction produced in a clothing article padded with the printed strip of the invention.

Therefore, as stated, the method of the present invention comprises the steps of: S1) making a wadding material from a preset fiber mixture of a preset denier, but of a different nature and also synthetic fibers; S2) coating the first and second main surfaces of the wadding strip element in a differentiated manner with preset resin mixtures; S3) causing the wadding strip element with differentiated resin coating to pass between heated cylinders at controlled temperature, pressure and speed of the wadding strip element, leaving the first main surface of the wadding strip element in contact with the cylinders, preferably made of steel, to obtain polishing of the main surface thereof and reduce its porosity; S4) depositing by printing or by another deposition method on the compacted and polished surface, coloring materials or other materials adapted to add thermal and decorative properties (if, for example, sheer nylon fabrics are used) to the wadding material of the wadding strip element.

In the method of the invention, the materials to be transferred are advantageously selected from one or more of the following materials: graphene, aluminum, titanium dioxide, aerogel, nano or non-nano elements and/or the like, although graphene is the preferred material.

Advantageously, the fiber mixture comprises a preset percentage of microfibers in a virgin and/or recycled fiber matrix.

According to a further aspect of the method of the invention, the fiber mixture comprises 100% recycled fibers.

In the method of the invention, the step of coating the first and second main surfaces of the wadding strip element with resin in a differentiated manner comprises applying to the first and second main surfaces at least two different resins, advantageously selected from vinyl resins, butadiene resins, styrene-vinyl resins and acrylic resins and any others known to those skilled in the art or that will be developed subsequently.

The Applicant has found that optimal results for printing and transferring of the desired materials are obtained with acrylic resins having respective Tg values variable from -40 to + 40 and adapted to operate as carriers for said materials for attributing the desired thermal properties.

Advantageously, in the method of the invention, the Applicant has also found that optimal results were obtained by making said cylinders from steel, and preferably by heating them to a temperature ranging from 130°C to 150°C and contacting the first and second main surfaces of the wadding strip element for a period of time adapted to allow crosslinking of the resin and substantially of 5 minutes by means of passage through a drying oven.

Of course, in the practical implementation of the method of the invention, not only one assembly of cylinders C1 and C2, but for example several assemblies of these cylinders arranged in series may be used.

Tests carried out by the Applicant have also allowed to determine that, at the end of the method, the mechanical strength of the wadding strip increased by about 50%, while the porosity was reduced substantially by 100% with respect to an initial porosity.

Tests carried out by the Applicant have also allowed to determine that the CLO value was optimized, i.e., in the strip of the invention it was possible to obtain the same CLO value as that of a conventional padding strip, while using less fiber, with a great saving of costs, taking into account that to obtain 1 kg of fibers 2 kg of oil are generally used.

The CLO value measured allowed even heat distribution in a plurality of clothing articles made using as padding the padding obtained by means of the method of the invention.

Therefore, the method of the invention provides a wadding strip element for making paddings of clothing articles, wherein the wadding strip element has at least a surface adapted to receive printed patterns and an improved thermal insulation property adapted to give to the padding of clothing articles treated with the aforesaid materials, as stated, the same CLO value as that of a corresponding known padding, but using an amount of fibers less than that used in the corresponding known padding.

Therefore, the padding obtained by means of the wadding treated according to the method of the invention is particularly suitable to be used in the field of clothing articles, in particular of windcheaters or sneakers.

From the above it can be noted how the present invention fully achieves the intended aim and objects.

In fact, the method of the invention allows wadding to be made with a given fiber mixture of a specific denier, but of a different nature and also of recycled fibers.

Moreover, due to the method of the invention, it is possible to increase the performance of a conventional wadding strip, with the aforesaid materials transferred, for example to greatly increase the thermal insulation of the padding produced, and with the same CLO value, using less fiber.

Ultimately, it is possible to dissipate and evenly distribute heat in the desired clothing article.

The method of the invention is susceptible to numerous changes and variants, all falling within the scope of the concept of the invention.

Therefore, the method of the invention will be limited by the formulation of the appended claims, rather than by the above description.

## Claims

1. A method for making a wadding material, to be used for making paddings of clothing articles such as windcheaters and/or shoes, said wadding material being adapted for depositing thereon at least an auxiliary material, said method comprising the steps of providing a wadding strip element having high porosity and low consistency, said wadding strip element having a first main surface, a second main surface and a preset thickness and preset mechanical strength and porosity, said method comprising at least a further step of subjecting said wadding strip element to a combined chemical, mechanical and thermal treatment process adapted to increase said preset strength of said wadding strip element and reduce said preset porosity of said wadding strip element thereby allowing deposition on said at least a first main surface of at least a said auxiliary material thereby said deposited material penetrates the wadding material only slightly to create on said main surface a predetermined printed pattern configuration adapted to withstand washing operations and inevitable wear, without decomposing, said method comprises the steps of: S1) making said wadding material from a preset fiber mixture of a preset denier, but of a different nature and also of synthetic fibers; S2) coating said first and second main surfaces of said wadding strip element in a differentiated manner with preset resin mixtures; S3) causing said wadding strip element with differentiated resin coating on said main surfaces to pass between heated cylinders at a controlled temperature, pressure and speed of said wadding strip element, leaving said first main surface of said wadding strip element in contact with said cylinders to obtain polishing of said surface and reduce its porosity; the method being **characterized in that** it further comprises the step of: S4) depositing by printing, preferably by reverse roller printing or any other printing or depositing method, for example by embossed cylinders or printing plates or screens, on said compacted and polished surface, coloring materials or other materials adapted to add thermal properties to the wadding material of said treated wadding strip element of steps S1) to S3) of said method.

2. A method, according to claim 1, **characterized in that** said printed pattern configuration further provides a decorative property, for example a plurality of honeycomb elements in contact with one another on substantially all their sides.

3. A method, according to claim 2, **characterized in that** said materials are selected from one or more of the following materials: graphene, aluminum, titanium dioxide, aerogel, and nano or non-nano elements.

4. A method, according to claim 2, **characterized in that** said fiber mixture comprises a preset percentage of microfibers in a virgin and/or recycled fiber matrix.

5. A method, according to claim 2, **characterized in that** said fiber mixture comprises 100% recycled fibers.

6. A method, according to claims 2 and 3, **characterized in that** said step of coating said first and second main surfaces of said wadding strip element with resin in a differentiated manner comprises applying to said first and second main surfaces at least two different resins selected from a group comprising vinyl resins, butadiene resins, styrene-vinyl resins and acrylic resins, said resins preferably having Tg values variable from -40 to + 40 and all being adapted to operate as carriers for said transferred materials.

7. A method, according to claim 2, **characterized in that** said cylinders are steel cylinders which are preferably heated to a temperature from 130°C to 150°C and contacting said first and second main surfaces of said wadding strip element for a period of time adapted to allow crosslinking of said resin, said period of time corresponding substantially to 5 minutes of passage through a heated oven.

8. A method, according to any of the preceding claims, **characterized in that,** at the end of said method, said wadding strip treated by said method has a mechanical strength increased by about 50% and a porosity reduced by substantially 100% with respect to an initial porosity of said wadding strip.

9. A wadding strip element for making paddings of clothing articles, in particular windcheaters and/or sneakers, obtained by means of a method according to any of the preceding claims, **characterized in that** said wadding strip element has on at least said main surface said predetermined printed pattern configuration that provides an improved thermal insulation property with an improved CLO value.

10. A clothing article, in particular a windcheater or sneaker, comprising a padding element including the wadding strip element according to claim 9.

## Patentansprüche

1. Verfahren zur Herstellung eines Wattierungsmaterials, das zur Herstellung von Wattierungen von Bekleidungsartikeln wie zum Beispiel Windjacken und/oder Schuhen verwendet wird, wobei das Wattierungsmaterial angepasst ist, um darauf mindestens ein Hilfsmaterial abzuscheiden, wobei das Verfahren die Schritte der Bereitstellung eines Wattierungsstreifenelementes mit hoher Porosität und geringer Konsistenz umfasst, wobei das Wattierungsstreifenelement eine erste Hauptoberfläche, eine zweite Hauptoberfläche und eine vorher bestimmte Dicke und eine vorher bestimmte mechanische Festigkeit und Porosität aufweist, wobei das Verfahren mindestens einen weiteren Schritt umfasst, bei dem das Wattierungsstreifenelement einem kombinierten chemischen, mechanischen und thermischen Behandlungsverfahren unterzogen wird, das angepasst ist, um die vorher bestimmte Stärke des Wattierungsstreifenelementes zu erhöhen und die vorher bestimmte Porosität des Wattierungsstreifenelementes zu reduzieren und dabei die Abscheidung auf mindestens einer Hauptoberfläche von wenigstens einem Hilfsmaterial zu erlauben, wodurch das abgeschiedene Material nur leicht durch das Wattierungsmaterial dringt, um auf der Hauptoberfläche eine vorherbestimmte gedruckte Musterkonfiguration zu erzeugen, die angepasst ist, um Waschschritten und unvermeidbarer Abnutzung zu wiederstehen, ohne sich zu zersetzen, wobei das Verfahren die folgenden Schritte umfasst: S1) Herstellung des Wattierungsmaterials aus einer vorher bestimmten Fasermischung mit vorher bestimmtem Denier, jedoch unterschiedlicher Natur und auch aus synthetischen Fasern; S2) Beschichten der ersten und zweiten Hauptoberflächen des Wattierungsstreifenelementes in einer differenzierten Art und Weise mit vorher bestimmten Kunstharzmischungen; S3) Bewirken, dass das Wattierungsstreifenelement mit differenzierter Kunstharzmischung auf den Hauptoberflächen durch erwärmte Walzen mit kontrollierter Temperatur, Druck und Geschwindigkeit des Wattierungsstreifenelementes läuft, wobei die Hauptoberfläche des Wattierungsstreifenelementes in Kontakt mit den Walzen bleibt, um ein Polieren der Oberfläche zu erhalten und deren Porosität zu verringern, wobei das Verfahren **dadurch gekennzeichnet ist, dass** es ferner die folgenden Schritte umfasst: S4) Abscheiden von Färbematerialien oder anderen Materialien, die dazu geeignet sind, dem Wattierungsmaterial des behandelten Wattierungsstreifenelementes der Schritte S1) bis S3) des Verfahrens thermische Eigenschaften zu verleihen, auf der komprimierten und polierten Oberfläche, durch Drucken, bevorzugt durch Umkehrwalzendruck oder ein anderes Druck- oder Abscheidungsverfahren, zum Beispiel durch Prägewalzen oder Druckplatten oder - Siebe.

2. Verfahren nach Anspruch 1, **dadurch gekennzeichnet, dass** die gedruckte Musterkonfiguration ferner eine dekorative Eigenschaft verleiht, zum Beispiel mehrere Wabenelemente, die sich an im Wesentlichen allen ihren Seiten gegenseitig berühren.

3. Verfahren nach Anspruch 2, **dadurch gekennzeichnet, dass** die Materialien ausgewählt sind aus einem oder mehreren der folgenden Materialien: Graphen, Aluminium, Titandioxid, Aerogel und Nano- oder Nicht-Nano-Elemente.

4. Verfahren nach Anspruch 2, **dadurch gekennzeichnet, dass** die Fasermischung einen vorher bestimmten Prozentsatz an Mikrofasern in einer neuen und/oder recycelten Fasermatrix umfasst.

5. Verfahren nach Anspruch 2, **dadurch gekennzeichnet, dass** die Fasermischung 100 % recycelte Fasern umfasst.

6. Verfahren nach den Ansprüchen 2 und 3, **dadurch gekennzeichnet, dass** der Schritt des Beschichtens der ersten und zweiten Hauptoberfläche des Wattierungsstreifenelementes mit Kunstharz auf differenzierte Art und Weise das Anwenden von mindestens zwei unterschiedliche Harzen auf der ersten und zweiten Hauptoberfläche umfasst, die ausgewählt sind aus einer Gruppe, umfassend Vinylharze, Butadienharze, Styrol-Vinyl-Harze und Acrylharze, wobei die Harze bevorzugt Tg-Werte aufweisen, die von -40 bis + 40 variieren und alle angepasst sind, um als Träger für die übertragenen Materialien zu wirken.

7. Verfahren nach Anspruch 2, **dadurch gekennzeichnet, dass** die Walzen Stahlwalzen sind, die bevorzugt auf eine Temperatur von 130°C bis 150° erhitzt werden und die obere und untere Hauptoberfläche des Wattierungsstreifenelementes für einen Zeitraum berühren, der ausreicht, um ein Quervernetzen des Harzes möglich zu machen, wobei der Zeitraum im Wesentlichen 5 Minuten des Durchgangs durch einen erhitzten Ofen entspricht.

8. Verfahren nach einem der vorstehenden Ansprüche, **dadurch gekennzeichnet, dass** am Ende des Verfahrens der Wattierungsstreifen, der durch das Verfahren behandelt wurde, eine um etwa 50 % erhöhte mechanische Festigkeit aufweist und eine um im Wesentlichen 100 % verringerte Porosität im Bezug auf eine Ausgangsporosität des Wattierungsstreifens aufweist.

9. Wattierungsstreifenelement zur Herstellung von Wattierung von Bekleidungsartikeln, insbesondere Windjacken und/oder Sneaker, das durch Mittel eines Verfahrens nach einem der vorstehenden Ansprüche erhalten wird, **dadurch gekennzeichnet, dass** das Wattierungsstreifenelement auf mindestens einer Hauptoberfläche die vorherbestimmte gedruckte Musteranordnung aufweist, welche eine verbesserte thermische Isolationseigenschaft mit einem verbesserten CLO-Wert bereitstellt.

10. Bekleidungsartikel, insbesondere eine Windjacke oder Sneaker, umfassend ein Wattierungselement, welches das Wattierungsstreifenelement nach Anspruch 9 enthält.

## Revendications

1. Procédé de fabrication d'un matériau d'ouatage destiné à être utilisé pour fabriquer des rembourrages d'articles vestimentaires tels que des blousons et/ou des chaussures, ledit matériau d'ouatage étant apte à déposer dessus au moins un matériau auxiliaire, ledit procédé comprenant les étapes de fournir un élément de bande d'ouate ayant une porosité élevé et une faible consistance, ladite bande d'élément d'ouate ayant une première surface principale, une seconde surface principale et une épaisseur préétablie et une résistance mécanique et une porosité préétablies, ledit procédé comprenant au moins une autre étape consistant à soumettre ledit élément de bande d'ouate à un processus de traitement chimique, mécanique et thermique adapté pour augmenter ladite résistance préétablie dudit élément de bande d'ouate et à réduire ladite porosité préétablie dudit élément de bande d'ouate en permettant ainsi le dépôt sur ladite au moins une première surface principale dudit au moins un matériau auxiliaire, ledit matériau déposé pénétrant ainsi dans le matériau d'ouatage seulement légèrement pour créer sur ladite surface principale une configuration prédéterminée de motif imprimé apte à résister à des opérations de lavage et à une usure inévitable sans se décomposer,
ledit procédé comprenant les étapes consistant à : S1) fabriquer ledit matériau d'ouatage à partir d'un mélange de fibres préétabli d'un denier préétabli mais de nature différente et également de fibres synthétiques ; S2) revêtement desdites première et seconde surfaces principales dudit élément de bande d'ouate de manière différenciée avec des mélanges de résine préétablis ; S3) amener ledit élément de bande d'ouate à revêtement de résine différencié desdites surfaces principales à passer entre des cylindres chauffés à une température, une pression et une vitesse contrôlée dudit élément de bande d'ouate, en laissant ladite première surface principale dudit élément de bande d'ouate en contact avec lesdits cylindres pour obtenir un polissage de ladite surface et réduire sa porosité ; le procédé étant **caractérisé en ce qu'**il comprend en outre l'étape consistant à : S4) déposer par impression, de préférence par impression au rouleau inversé ou tout autre procédé d'impression ou de dépôt, par exemple par des cylindres gaufrés ou des plaques ou des écrans d'impression, sur ladite surface compactée et polie des matériaux colorants ou autres matériaux aptes à rajouter des propriétés thermiques au matériau d'ouate dudit élément de bande d'ouate traité des étapes S1) à S3) dudit procédé.

2. Procédé selon la revendication 1, **caractérisé en ce que** ladite configuration de dessin imprimé procure en outre une propriété décorative, par exemple une pluralité d'éléments en nid d'abeilles en contact les uns avec les autres pratiquement sur tous leurs côtés.

3. Procédé selon la revendication 2, **caractérisé en ce que** lesdits matériaux sont sélectionnés parmi un ou plusieurs des matériaux suivants : graphène, aluminium, dioxyde de titane, aérogel et nano-élément ou non-nano-élément.

4. Procédé selon la revendication 2, **caractérisé en ce que** ledit mélange de fibres comprend un pourcentage préétabli de microfibres dans une matrice de fibres vierges et/ou recyclées.

5. Procédé selon la revendication 2, **caractérisé en ce que** ledit mélange de fibres comprend 100 % de fibres recyclées.

6. Procédé selon les revendications 2 et 3, **caractérisé en ce que** ladite étape de revêtement desdites première et seconde surfaces principales dudit élément de bande d'ouate avec de la résine de manière différenciée comprend l'application sur lesdites première et seconde surfaces principales d'au moins deux résines différentes sélectionnées dans un groupe comprenant les résines de vinyle, résines de butadiène, résines de styrène-vinyle et résines acryliques, lesdites résines ayant de préférence des valeurs Tg variables de -40 à +40 et étant toutes aptes à fonctionner en tant que supports pour lesdits matériaux transférés.

7. Procédé selon la revendication 2, **caractérisé en ce que** lesdits cylindres sont des cylindres en acier qui sont de préférence chauffés à une température de 130 °C à 150 °C et venant en contact avec lesdites première et seconde surfaces principales dudit élément de bande d'ouate pendant une durée apte à permettre la liaison croisée de ladite résine, ladite période correspondant pratiquement à 5 minutes de passage dans un four chauffé.

8. Procédé selon l'une quelconque des revendications précédentes, **caractérisé en ce que,** à la fin dudit procédé, ladite bande d'ouate traitée par ledit procédé a une résistance mécanique augmentée d'environ 50 % et une porosité réduite de pratiquement 100% par rapport à la porosité initiale de ladite bande d'ouate.

9. Élément de bande d'ouate pour la fabrication d'articles vestimentaires, en particulier des blousons et/ou des chaussures, obtenu au moyen d'un procédé selon l'une quelconque des revendications précédentes, **caractérisé en ce que** ledit élément de bande d'ouate comporte sur ladite surface principale ladite configuration prédéterminée de motif imprimé qui procure une propriété d'isolation thermique améliorée avec une valeur CLO améliorée.

10. Article vestimentaire, en particulier blouson ou chaussures, comprenant un élément de rembourrage incluant l'élément de bande d'ouate selon la revendication 9.
